# EUROPEAN PATENT SPECIFICATION

(11) **EP 2 327 914 B1**
(45) Date of publication and mention of the grant of the patent: **14.08.2013**
(21) Application number: 09176269.0
(22) Date of filing: 18.11.2009
(51) Int. Cl.: F16L 11/15, F16L 11/11, F16L 13/02, F16L 33/26, F16L 33/01

(54) **Hose assembly**
Schlauchanordnung
Ensemble de tuyau

(43) Date of publication of application: 01.06.2011
(73) Proprietor: BOA Nederland BV, 5015 BR Tilburg (NL)
(72) Inventor: Slezak, Tijs, 4891 AW, Rijsbergen (NL)
(74) Representative: Lermer, Christoph

(56) References cited:
- EP-A1- 0 707 170
- EP-A2- 1 617 122
- DE-B- 1 253 533
- DE-U- 7 202 194
- DE-U1- 20 212 169
- US-A- 3 675 951
- US-A- 6 106 027

## Description

### TECHNICAL FIELD

The invention relates to a hose assembly, comprising: an inner hose; and an outer hose enclosing at least a section of the inner hose.

### PRIOR ART

In many technical applications hoses and tubes are used for transporting media, e.g. fluids. The properties of a hose as well as of a coupling construction between the hose and a connecting piece depend on the particular application.

For example, in vacuum applications there may be specific requirements regarding stability, leak tightness, temperature resistance, pressure resistance, etc. At the same time it is preferred to use flexible conduits. Furthermore, e.g. in the field of semiconductor production, nanotechnology or in medical and pharmaceutical applications it is required to avoid contamination of the inner space of the hose and of the coupling construction and to facilitate effective cleaning of the hose.

Another problem may be that vibrations are caused by particles/fluids having high velocities while passing through the hose and the coupling construction.

US 6,106,027 A, DE 1 253 533 B1, DE 72 02 194 U, DE 202 12 169 U1, EP 1 617 122 A2 and US 3,675,951 A describe hose assemblies comprising two sleeve-like portions which are configured to fix the hose between said portions. The portions are connected to each other by a nut or any tensioning means. EP 0 707 170 A1 describes a hose assembly, according to the preamble of claim 1, comprising a first and a second clamping element, the clamping elements being arranged so as to fix a tube or hose between them. The clamping elements are fixed to each other by a clamp ring.

However, the hose assemblies known from the state of the art are not suitable for vacuum applications. Thus, it is the object of the present application to provide a hose assembly having improved sealing properties and, being easy to clean.

### OBJECT OF THE INVENTION

It is an object of the present invention to provide a hose assembly which may be used under vacuum conditions and which provides high stability, leak tightness and prevents contamination of the inner space of the hose and the coupling section.

### TECHNICAL SOLUTION

This problem is solved by providing a hose assembly according to claim 1 and a method according to claim 14. The features of the dependent claims refer to preferred embodiments of the invention.

The inventive hose assembly comprises: an inner hose; and an outer hose enclosing at least a section of the inner hose. Furthermore, the hose assembly comprises a coupling assembly wherein a first end section of the inner hose is fixed to the coupling assembly.

The outer hose is provided for supporting the inner hose which has a smooth inner surface for facilitating smooth flow of a medium flowing through the hose assembly. The end section of the inner hose protrudes from the inner space defined by the outer hose and is fixed to the coupling element, between a first fixing element and a second fixing element. The coupling element may be provided as a single unit or consist of various components. By fixing the inner hose to the coupling element a vacuum tight seal is provided. Furthermore, there is no change in the diameter along the transition section between the hose section and the coupling element and hardly any space for particles to nest.

The fixing elements are connected by welding. For example, an orbital weld seam may be provided which connects the elements in an air-tight manner. Besides being vacuum-tight the welds are smooth, and therefore the hose assembly is vacuum compatible and easy to clean. By using a welding machine welding may be controlled efficiently.

Due to these characteristics the hose assembly (hose construction) is particularly suitable for vacuum applications as well as for medical and pharmaceutical applications. By means of the inventive hose assembly contamination may be prevented efficiently. Furthermore, effective cleaning may be ensured. Vibrations are prevented by providing a smooth inner surface and a constant inner diameter of the flow channel extending along the length of the hose and the coupling element.

According to the invention, the coupling assembly includes a first clamping element and a second clamping element, wherein the first clamping element is connected to the second clamping element. The first end section of the inner hose is fixed between the first clamping element and the second clamping element. The clamping elements correspond to the fixing elements mentioned above. Fixing may be provided by clamping or any other known method.

It is preferred that the first end section of the inner hose is clamped between the first clamping element and the second clamping element. Clamping the end portion of the inner hose between the clamping elements provides a simple, easy-to-handle and reliable way to provide a vacuum tight seal.

It is preferred that the inner hose comprises a wall which is made of a flexible, particularly a vacuum compatible material. The inner hose may be provided as a liner arranged at the inner surface of the outer hose or laminated on the inner surface of the outer hose. An end portion of the inner hose exceeds the free end of the outer hose.

Due to the fact that the inner hose is made of a smooth flexible material the fluid or medium flowing through the hose does not pass any corrugations and hardly any gaps. Therefore, vibrations of the hose assembly may be reduced, and nesting of particles, e.g. bacteria, may be prevented.

In a preferred embodiment of the invention the hose assembly comprises a wall made of a plastics material. Particularly, the plastics material is vacuum compatible. For example, the wall may consist of PTFE (Polytetrafluorethylene) and/or PFA (Perfluoralkoxylalkan).

The inner hose may be provided as a plastic liner, most of the length of the inner hose being enclosed by the outer hose.

In another preferred embodiment of the invention the outer hose may comprise a wall made of a rigid material, particularly a metal material. For example, the outer hose may be a flexible metal hose. The outer hose is thus rigid with respect to compression, but it may be flexible with respect to bending.

For example, the outer hose may be a metal or stainless steel hose which supports the inner hose due to higher pressure resistance. Furthermore, the outer hose covers and protects the inner hose. The outer hose as well as the inner hose are vacuum-tight.

In order that the rigid hose be flexible with respect to bending the outer hose may comprise parallel corrugations and/or consist of segments arranged in line and movably connected. The outer hose keeps the inner hose in a predetermined shape having a predetermined inner diameter.

The peaks and troughs of the corrugations extend periodically along the flow direction of the medium. The inner hose, on the other hand, prevents the medium flowing through the hose assembly from contacting the corrugations by covering the inner surface of the outer hose and providing a smooth and even surface.

It is preferred that the outer hose is connected/fixed to a first end of the first clamping element. For example, an end of the outer hose may be connected to the end of the first clamping element facing the free end of the outer hose. The connection may be a weld seam, for example an orbital weld seam. When using a welding machine for providing the weld seam the quality of the weld may be controlled efficiently. The weld is vacuum-tight and smooth.

In a preferred embodiment of the invention the first clamping element comprises a bushing (sleeve) including a first end portion having a first inner diameter and a second end portion having a second inner diameter. The second end of the bushing may be connected to an end of the outer hose.

Particularly, the second inner diameter may be smaller than the first inner diameter.

It is preferred that the second end portion of the bushing comprises a radial protrusion (inner protrusion) protruding inwards, wherein the inner diameter of the inner protrusion corresponds to the second inner diameter. In other words, a protrusion extending inwards reduces the inner diameter of the second end portion compared with the diameter of the first end portion.

Furthermore, the first end of the first clamping element may comprise a first radial protrusion protruding outwards and having a first contact surface for contacting a corresponding second contact surface of the second clamping element.

It is preferred that the second clamping element comprises a tube-like element including a first section having a first inner diameter and a first outer diameter, and a second section having a second inner diameter and a second outer diameter, and the second section has a first free end. Furthermore, the second clamping element may comprise a second radial protrusion protruding outwards and having a second contact surface facing the first contact surface of the first clamping element. When being mounted the first contact surface abuts on the second contact surface. The first radial protrusion and the second radial protrusion may be connected, e.g. by welding.

Particularly, an end portion of the inner hose extends over the outer surface of the second section of the second clamping element. The end portion contacts and encloses (at least a portion of) the second clamping element. The flexible inner hose is pulled over the outer surface of the second section.

It is preferred that the first inner diameter of the second clamping element corresponds to the second inner diameter of the second clamping element. Thus, the inner diameter throughout the first section and the second section is constant. Therefore, a smooth flow of the medium through the flow space of the second clamping element is provided.

Substantially, the inner diameter of the second clamping element corresponds to the inner diameter of the inner hose.

It is preferred that the second outer diameter of the second section of the second clamping element is smaller than the first outer diameter of the first section of the second clamping element, wherein the difference between the second outer diameter and the first outer diameter substantially corresponds to the thickness of the end portion of the inner hose extending over the outer surface of the second section of the second clamping element.

Particularly, the difference between the outer diameters is a bit smaller than the thickness of the end portion of the inner hose. Therefore, when clamping the inner hose between the first clamping element and the second clamping element the inner hose is fixed between the first clamping element and the second clamping element. Furthermore, there is no gap between the inner hose and the second clamping element. Therefore, there is hardly any possibility for bacteria and particles to nest and accumulate, respectively.

Particularly, the second inner diameter of the second section of the second clamping element is smaller than the second inner diameter of the second end portion of the first clamping element, wherein the difference between these diameters substantially corresponds to the thickness of the end portion of the inner hose extending over the outer surface of the second section of the second clamping element.

It is preferred that the first end of the second section of the second clamping element is wedge-shaped or tapered. In order to guide the first end of the inner hose smoothly over the outer surface of the second section of the second clamping element.

An inventive method for mounting a hose assembly, particularly a hose assembly according to the present invention, comprises the steps: a) providing a hose assembly, particularly a hose assembly as described above; b) clamping an end section of the inner hose between the first clamping element and the second clamping element; and c) fixing by welding the first clamping element to the second clamping element.

The method includes welding the outer hose to the first clamping element. The outer hose may be connected with a first end of the first clamping element before or after step c) .

According to the invention, the connection between the first clamping element and the second clamping element is provided by welding. The connection, between the first clamping element and the outer hose may be provided by welding. Particularly, an orbital welding seam may be provided, especially by using a welding machine.

### BRIEF DESCRIPTION OF THE DRAWINGS

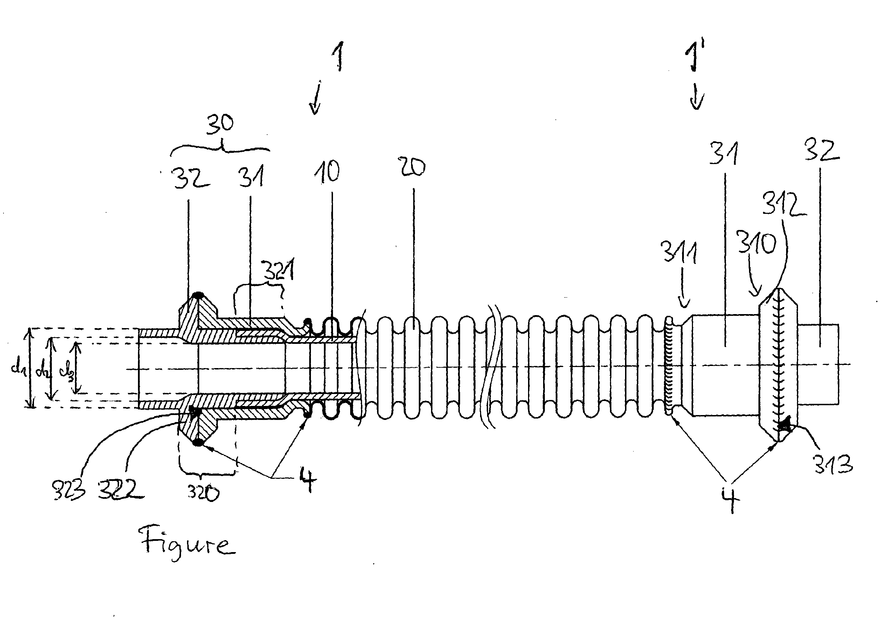

Further features and advantages of the invention will be apparent from the following description of a preferred embodiment and the appended drawing. The figure illustrates a sectional view and a top view of a hose assembly according to the present invention.

### DETAILED DESCRIPTION OF A PREFERRED EMBODIMENT OF THE INVENTION

The figure illustrates hose assemblies 1 and 1' according to the present invention. On the left side of the figure a sectional view of a portion of the hose assembly 1 is shown, on the right side a top view of the hose assembly 1' is illustrated. The hose assemblies 1 and 1' have the same construction. Reference numbers have been included either in the illustration of assembly 1 or 1'.

hose assembly 1 or 1' comprises an inner hose 10, an outer hose 20 and a coupling element 30 including a first clamping element 31 and a second clamping element 32.

The inner hose 10 consists of a smooth and flexible material, e.g. plastics material like PFA or PTFE. The outer hose 20 is made of a rigid material, e.g. stainless steel. It comprises corrugations which allow bending of the outer hose 20.

Most of the length of the inner hose 10 is enclosed by the outer hose 20. The outer hose 20 supports the inner hose 10, particularly under vacuum conditions. However, an end portion of the inner hose 10 protrudes from a free end of outer hose 20. The end section of the inner hose 10 protruding from the outer hose 20 is clamped between the first clamping element 31 and the second clamping element 32.

The first clamping element 31 is formed like a bushing. It comprises a first end portion 310 and a second end portion 311. The inner diameter d₂ of the second end portion 311 is smaller than the inner diameter d₁ of the first end portion 310. The second end portion 311 comprises a protrusion extending inwards, thus reducing the inner diameter of the second end 311 compared with the inner diameter of the first end portion 310. Furthermore, the first end portion 312 has a first radial protrusion extending outwards and having a first contact surface 313.

The second clamping element 32 is formed like a tube-like element having a first section 320 and a second section 321. The inner diameter d₃ of the first section 320 corresponds to the inner diameter of the second section 321. Furthermore, the first section 320 has an outer diameter d₁ which corresponds to the inner diameter of the first end portion 310 of the first clamping element 31. The outer diameter d₂ of the second section 321 is smaller than the outer diameter d₁ of the first section 320. The difference between the outer diameters substantially corresponds to the thickness or is smaller than the thickness of the end portion of the inner hose 10 clamped between the first clamping element 31 and the second clamping element 32.

Furthermore, the first section 320 comprises a radial protrusion 322 extending outwards. The protrusion 322 comprises a contact surface 323 which, in a mounted state, abuts the first contact surface 313 of the first radial protrusion 312 of the first clamping element 31.

The end portion of the second section 321 of the second clamping element 32 is tapered or wedge-shaped in order to guide the end portion of the inner hose 10 smoothly over the outer surface of the second section 321 leaving no space between the outer surface of the second section 321 and the inner surface of the end portion of the inner hose 10.

The inner diameter d₃ of the inner hose 10 (except in the end portion positioned on the outer surface 321 of the second clamping element 32) corresponds to the inner diameter d₃ of the second clamping element 32.

The first clamping element 31 is connected with the second clamping element 32 by means of an orbital weld 4. In a similar manner a free end of the outer hose 20 is connected with a free end of the first clamping element 31 by another orbital weld 4.

It can be seen in the figure that the flow channel for the medium flowing through the hose assembly 1, 1' is substantially constant and the wall of the flow channel has a smooth end even inner surface. Therefore, particles, bacteria etc. have no space for nesting and accumulating at the boundaries of the flow channel. Furthermore, effective mounting as well as effective cleaning of the assembly 1 is facilitated.

## Claims

1. A hose assembly (1), comprising:
an inner hose (10);
an outer hose (20) enclosing at least a section of the inner hose (10); and
a coupling assembly (30) including a first clamping element (31) and a second clamping element (32),
whereinthe first clamping element (31) is connected to the second clamping element (32), and
a first end section of the inner hose (10) is fixed between the first clamping element (31) and the second clamping element (32),
**characterised in that**
the first clamping element (31) is connected to the second clamping element (32) by welding.

2. The hose assembly (1) according to claim 1,
**characterised in that**
the first end section of the inner hose (10) is clamped between the first clamping element (31) and the second clamping element (32).

3. The hose assembly (1) according to any of the previous claims, **characterised in that**
the inner hose (10) comprises a wall made of a flexible material.

4. The hose assembly (1) according to any of the previous claims, **characterised in that**
the inner hose (10) comprises a wall made of a plastics material.

5. The hose assembly (1) according to any of the previous claims, **characterised in that**
the outer hose (20) comprises a wall made of a rigid material, particularly a metal material.

6. The hose assembly (1) according to any of the previous claims, **characterised in that**
the outer hose (20) comprises parallel corrugations formed therein.

7. The hose assembly (1) according to any of the previous claims, **characterised in that**
the outer hose (20) is connected to a first end (310) of the first clamping element (31).

8. The hose assembly (1) according to any of the previous claims, **characterized in that**
the first clamping element (31) comprises a bushing including a first end (310) having a first inner diameter (d₁) and a second end (311) having a second inner diameter (d₂).

9. The hose assembly (1) according to claim 8,
**characterised in that**
the second inner diameter (d₂) is smaller than the first inner diameter (d₁).

10. The hose assembly (1) according to claim 8 or 9,
**characterised in that**
the second end (311) comprises a radial protrusion protruding inwards, wherein the inner diameter of the inner protrusion corresponds to the second inner diameter (d₂).

11. The hose assembly (1) according to any of the previous claims, **characterised in that**
the second clamping element (32) comprises a tube-like element including a first section (320) having a first inner diameter (d₃) and a first outer diameter (d₁), and
a second section (321) having a second inner diameter (d₃) and a second outer diameter (d₂), and the second section (321) has a first free end.

12. The hose assembly (1) according to claim 11,
**characterised in that**
an end portion of the inner hose (10) extends over the outer surface of the second section (321) of the second clamping element (32).

13. The hose assembly (1) according to any of claims 11 or 12, **characterised in that**
the first free end of the second section (322) is tapered for guiding the end portion of the inner hose (10) smoothly over the outer surface of the second section (321) of the second clamping element (32).

14. A method for mounting a hose assembly, comprising the following steps:
a) providing a hose assembly (1) according to any of the claims 1 to 13;
b) clamping an end section of the inner hose (10) between the first clamping element (31) and the second clamping element (32); and
c) fixing the first clamping element (31) to the second clamping element (32) by welding.

## Patentansprüche

1. Schlauchbaugruppe (1), umfassend:
einen Innenschlauch (10);
einen Außenschlauch (20), welcher mindestens einen Teil des Innenschlauchs (10) umschließt; und
eine Kopplungsanordnung (30) umfassend eine erste Klemmbefestigung (31) und eine zweite Klemmbefestigung (32),
wobei die erste Klemmbefestigung (31) mit der zweiten Klemmbefestigung (32) verbunden ist, und ein erster Endabschnitt des Innenschlauches (10) zwischen der ersten Klemmbefestigung (31) und der zweiten Klemmbefestigung (32) befestigt ist,
**dadurch gekennzeichnet, dass**
die erste Klemmbefestigung (31) mit der zweiten Klemmbefestigung (32) durch Schweißen verbunden ist.

2. Schlauchbaugruppe (1) nach Anspruch 1,
**dadurch gekennzeichnet, dass**
der erste Endabschnitt des Innenschlauches (10) zwischen der ersten Klemmbefestigung (31) und der zweiten Klemmbefestigung (32) eingeklemmt ist.

3. Schlauchbaugruppe (1) nach einem der vorhergehenden Ansprüche,
**dadurch gekennzeichnet, dass**
der Innenschlauch (10) eine Wand aus einem biegsamen Material aufweist.

4. Schlauchbaugruppe (1) nach einem der vorhergehenden Ansprüche,
**dadurch gekennzeichnet, dass**
der Innenschlauch (10) eine Wand aus Plastik aufweist.

5. Schlauchbaugruppe (1) nach einem der vorhergehenden Ansprüche,
**dadurch gekennzeichnet, dass**
der Außenschlauch (20) eine Wand aus starrem Material aufweist, insbesondere aus Metall.

6. Schlauchbaugruppe (1) nach einem der vorhergehenden Ansprüche,
**dadurch gekennzeichnet, dass**
der Außenschlauch (20) parallel gewellt ist.

7. Schlauchbaugruppe (1) nach einem der vorhergehenden Ansprüche,
**dadurch gekennzeichnet, dass**
der Außenschlauch (20) mit einem ersten Ende (310) der ersten Klemmbefestigung (31) verbunden ist.

8. Schlauchbaugruppe (1) nach einem der vorhergehenden Ansprüche,
**dadurch gekennzeichnet, dass**
die erste Klemmbefestigung (31) eine Buchse umfasst, die ein erstes Ende (310) mit einem ersten Innendurchmesser (d1) und ein zweites Ende (311) mit einem zweiten Innendurchmesser (d2) aufweist.

9. Schlauchbaugruppe (1) nach Anspruch 8,
**dadurch gekennzeichnet, dass**
der zweite Innendurchmesser (d2) kleiner ist als der erste Innendurchmesser (d1).

10. Schlauchbaugruppe (1) nach Anspruch 8 oder 9,
**dadurch gekennzeichnet, dass**
das zweite Ende (311) eine radial verlaufende, nach innen hervorstehende Ausbuchtung umfasst,
wobei der Innendurchmesser der Innenausbuchtung dem zweiten Innendurchmesser (d2) entspricht.

11. Schlauchbaugruppe (1) nach einem der vorhergehenden Ansprüche,
**dadurch gekennzeichnet, dass**
die zweite Klemmbefestigung (32) ein rohrähnliches Bestandteil umfasst, das einen ersten Abschnitt (320) mit einem ersten Innendurchmesser (d3) und einem ersten Außendurchmesser (d1), und einen zweiten Abschnitt (321) mit einem zweiten Innendurchmesser (d3) und einem zweiten Außendurchmesser (d2) aufweist, und der zweite Abschnitt (321) ein erstes freies Ende hat.

12. Schlauchbaugruppe (1) nach Anspruch 11,
**dadurch gekennzeichnet, dass**
sich ein Endabschnitt des Innenschlauches über die Außenfläche des zweiten Abschnitts (321) der zweiten Klemmbefestigung (32) erstreckt.

13. Schlauchbaugruppe (1) nach Anspruch 11 oder 12,
**dadurch gekennzeichnet, dass**
das erste freie Ende des zweiten Abschnitts angeschrägt ist, um den Endabschnitt des Innenschlauches (10) sanft über die Außenfläche des zweiten Abschnitts (321) der zweiten Klemmbefestigung (32) zu führen.

14. Verfahren zur Montage einer Schlauchbaugruppe, umfassend die folgenden Schritte:
a) Bereitstellen einer Schlauchbaugruppe (1) gemäß einem der Ansprüche 1 bis 13;
b) Einklemmen eines Endabschnittes des Innenschlauches (10) zwischen der ersten Klemmbefestigung (31) und der zweiten Klemmbefestigung (32); und
c) Befestigen der ersten Klemmbefestigung (31) an der zweiten Klemmbefestigung (32) durch Schweißen.

## Revendications

1. Ensemble de tuyaux (1) comprenant :
un tuyau intérieur (10),
un tuyau extérieur (20) enfermant au moins une section du tuyau intérieur (10),
un ensemble de couplage (30) comprenant un premier élément de serrage (31) et un second élément de serrage (32),
le premier élément de serrage (31) étant relié au second élément de serrage (32) et une première section d'extrémité du tuyau intérieur (10) étant fixée entre le premier élément de serrage (31) et le second élément de serrage (32),
**caractérisé en ce que**
le premier élément de serrage (31) est relié au second élément de serrage (32) par soudure.

2. Ensemble de tuyaux (1) selon la revendication 1,
**caractérisé en ce que**
la première section d'extrémité du tuyau intérieur (10) est serrée entre le premier élément de serrage (31) et le second élément de serrage (32).

3. Ensemble de tuyaux (1) selon l'une quelconque des revendications précédentes,
**caractérisé en ce que**
le tuyau intérieur (10) comprend une paroi faite en un matériau flexible.

4. Ensemble de tuyaux (1) selon l'une quelconque des revendications précédentes,
**caractérisé en ce que**
le tuyau intérieur (10) comprend une paroi faite en plastique.

5. Ensemble de tuyaux (1) selon l'une quelconque des revendications précédentes,
**caractérisé en ce que**
le tuyau extérieur (20) comprend une paroi faite en un matériau rigide, en particulier un matériau métallique.

6. Ensemble de tuyaux (1) selon l'une quelconque des revendications précédentes,
**caractérisé en ce que**
le tuyau extérieur (20) comprend des ondulations parallèles formées à l'intérieur.

7. Ensemble de tuyaux (1) selon l'une quelconque des revendications précédentes,
**caractérisé en ce que**
le tuyau extérieur (20) est relié à une première extrémité (310) du premier élément de serrage (31).

8. Ensemble de tuyaux (1) selon l'une quelconque des revendications précédentes,
**caractérisé en ce que**
le premier élément de serrage (31) comprend une bague comprenant une première extrémité (310) ayant un premier diamètre intérieur (d₁) et une seconde extrémité (311) ayant un second diamètre intérieur (d₂).

9. Ensemble de tuyaux (1) selon la revendication 8,
**caractérisé en ce que**
le second diamètre intérieur (d₂) est plus petit que le premier diamètre intérieur (d₁).

10. Ensemble de tuyaux (1) selon la revendication 8 ou 9,
**caractérisé en ce que**
la seconde extrémité (311) comprend une protubérance radiale qui fait saillie vers l'intérieur, le diamètre intérieur de la protubérance intérieure correspondant au second diamètre intérieur (d₂).

11. Ensemble de tuyaux (1) selon l'une quelconque des revendications précédentes,
**caractérisé en ce que**
le second élément de serrage (32) comprend un élément semblable à un tube qui comprend une première section (320) ayant un premier diamètre intérieur (d₃) et un premier diamètre extérieur (d₁) et une seconde section (321) ayant un second diamètre intérieur (d₃) et un second diamètre intérieur (d₂) et la seconde section (321) a une première extrémité libre.

12. Ensemble de tuyaux (1) selon la revendication 11,
**caractérisé en ce**
**qu'**une portion d'extrémité du tuyau intérieur (10) s'étend sur la surface extérieure de la seconde section (321) du second élément de serrage (32).

13. Ensemble de tuyaux (1) selon l'une quelconque des revendications 11 ou 12,
**caractérisé en ce que**
la première extrémité libre de la seconde section (322) est effilée pour guider la portion d'extrémité du tuyau intérieur (10) en douceur sur la surface extérieure de la seconde section (321) du second élément de serrage (32).

14. Procédé pour le monter un ensemble de tuyaux comprenant les étapes suivantes :
a) fournir un ensemble de tuyaux (1) selon l'une quelconque des revendications 1 à 13 ;
b) serrer une section d'extrémité du tuyau intérieur (10) entre le premier élément de serrage (31) et le second élément de serrage (32) et
c) fixer le premier élément de serrage (31) au second élément de serrage (32) par soudure.
